# EUROPEAN PATENT SPECIFICATION

(11) **EP 2 540 604 B1**
(45) Date of publication and mention of the grant of the patent: **23.11.2016**
(21) Application number: 12174168.0
(22) Date of filing: 28.06.2012
(51) Int. Cl.: A45C 9/00, B62J 9/00, A45C 5/14, B62K 3/00

(54) **Luggage scooter device**
Gepäckrollervorrichtung
Dispositif de patinette pour bagage

(30) Priority: 29.06.2011 IE 20110306
(43) Date of publication of application: 02.01.2013
(73) Proprietor: Porri, Federico, Dublin 1 (IE)
(72) Inventor: Porri, Federico, Dublin 1 (IE)
(74) Representative: Camolese, Marco

(56) References cited:
- EP-A1- 1 138 590
- DE-U1- 20 017 587
- FR-A1- 2 843 088
- US-A1- 2004 094 919
- US-A1- 2009 315 301

## Description

### Technical field

The invention relates to a bag/suitcase that can be used as a normal luggage or transformed into a skateboard and driven as a scooter while leaving the content in the suitcase.

### Background of the invention

Air traveling is a daily procedure nowadays; people need to move quickly within airports and around with their luggage. The invention deals with the problem of a traveler carrying luggage when moving around airports, train stations or elsewhere.

Follows a list of similar projects, all of them have differences from this invention: USD268938 of May 10 1983; US2009/0315301 of Dec 24 2009; WO2004/012984 of Feb 12 2004; US2004/0094919 of May 20 2004; WO2004/093595 of Nov 4 2004; US4145065 of Mar 20 1979; US3314494 of Apr 18 1967; US3413011 of Nov 26 1968; US2004/0056442 of Mar 25 2004; US7731204 of Jun 8 2010; EP1138590 of Apr 10 2001; WO03/045185 of Jun 5 2003; US7431311 of Oct 7 2008; US2010/0213680 of Aug 26 2008; WO03/093093 of Nov 13 2003; WO2010/094824 of Aug 26 2010; WO03/045185 of Jun 5 2003; PCT FR01/02556 of Sept 17 2001.

Document EP1138590A1 relates to a scooter trolley, having a baggage attached to a user propelled scooter; the scooter has a directional wheel steered by a telescopically extendable steer; the scooter also has an extendable platform comprising a rear wheel, having a conventional transversal axle.

Document US2004/0094919A1 relates to a scooter trolley having a plurality of wheels, and an extendable platform; the front wheels of the scooter can be steered by means of steerable rollers, for example having a Bowden wire or an elastically supported steering axle; the extendable platform comprises one rear roller and may be rotated pivotally on a horizontal plane.

Compared with the devices of prior art, the invention will help the traveler to move faster and with less effort.

### Summary of the invention

It is an object of the invention, hereafter called "Skate-trolley", to provide a luggage designed so that it can be used as a normal suitcase/trolley or the traveller can be carried by the luggage rather than him/her carrying it.

This and further objects of the present invention are achieved by a Skate-trolley according to the present invention, i.e. by a "luggage scooter device" as set out in the appended claims, which form an integral part of the present description.

Skate-trolley has a platform with wheels that can be pulled out of the bag to be ridden on, in a skate-board manner, and a pull-out driving stick that can be used to drive the front wheel in a scooter way. The whole design is developed in order to fit the driving stick and the standing platform within the box shape of the luggage. The Skate-trolley is designed to reduce weight - therefore the suitcase outside structure acts as a frame for the scooter-skateboard systems. Skate-trolley can be built in different sizes, but is designed to maximize space and the smaller can be built in one size that will fit the standard carry-on luggage airline requirements.

### Brief description of the drawings

These and other features of the invention will be clear from the following description of a preferred embodiment, given as a non-restricting example, with reference to the attached drawings, wherein:
- Figure 1 shows a 2D view of the Skate-Trolley seen from the side;
- Figure 2 shows a 2D view of the Skate-Trolley seen from the top;
- Figure 3 shows a 2D view of the Skate-Trolley seen from the front;
- Figure 4 shows a 2D view of the Skate-Trolley seen from the back;
- Figure 5 shows the Skate-Trolley seen in 3D perspective;
- Figure 6 shows the Skate-Trolley ridden by user;
- Figure 7 shows a user pushing the Skate-Trolley;
- Figure 8 shows a user pulling the Skate-Trolley;
- Figure 9 shows a user pulling the Skate-Trolley in a trolley manner;
- Figure 10 shows standing Skate-Trolley;
- Figure 11 shows a user carrying the Skate-Trolley;
- Figure 12 shows a stowed Skate-Trolley;
- Figure 13 shows the front driving mechanism of the Skate-Trolley;
- Figure 14 shows the standing platform mechanism of the Skate-Trolley;
- Figure 15 shows the steering effect of the rear wheels of the Skate-Trolley;
- Figure 16 shows the Rear Wheels steering effect of the Skate-Trolley.

In the accompanying drawings, alike elements and/or structures are indicated in different figures by the same references.

### Detailed description

A detailed description is presented through the explanation of the major parts of a preferred embodiment of the Skate-trolley.

The device according to invention, called "Skate trolley", is a luggage that can be converted into a skateboard-scooter.

Skate-Trolley is built around an external frame made of carbon fiber, fiberglass, plastic, aluminum structure or any other material strong enough to hold a person's weight. To this structure all items and systems are connected; in order to make Skate trolley very light there is no internal frame, but the external structure itself acts as a frame. Skate trolley has a retractable Driving Stick that steers the front wheel, a retractable platform with wheels and a door so the inside of the suitcase can be accessed to store luggage. The traveler standing on the platform can ride the luggage rather than carry it. The traveler, using the combined effect of a scooter and of skateboard steering effect, can maneuver in small spaces with a lot of obstacles such as those found in airports.

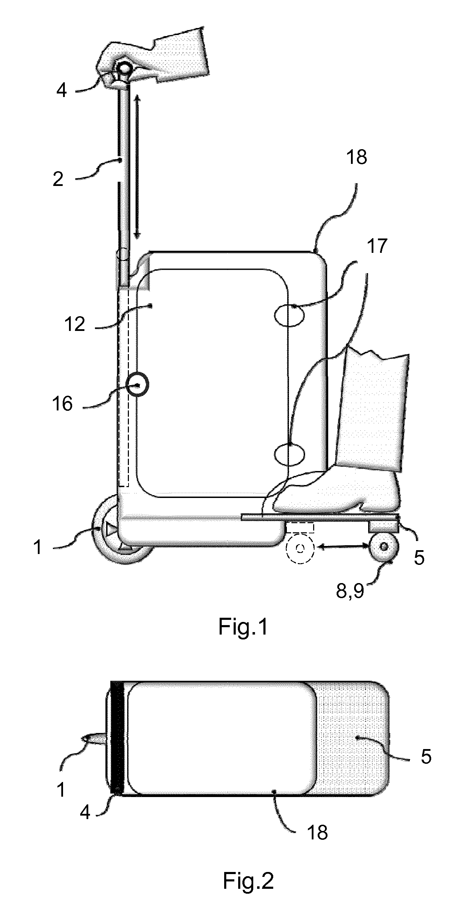

Figure 1 schematically represents a 2D view of the Skate-Trolley seen from the side - the picture shows the driving stick (4) in the operational position and, in dotted lines, the closed position. The standing platform (5) can be seen in the operational position and in the closed position depicted by dotted lines. The door (12) that opens the luggage is in the closed position. A drawing of a foot and of the hands of a user in dotted lines shows the correct position to drive skate-trolley.

References: (1) Front wheel, (2) Driving stick (later reference 101) vertical part, (4) Driving Stick horizontal handle, (5) Standing platform, (8) Rear Left wheel, (9) Rear Right Wheel, (12) Door, (16) Door lock, (17) Hinges, (18) External Structure.

The external structure (18) of the Skate Trolley is made of any resistant and light material strong enough to hold a person weight. The external structure (18) has preferably the shape of a box to optimize loading and storing space. To the external structure (18), all the other elements are attached to.

In particular, the door (12) has preferably two hinges (17) and a locking system (16) allowing it to be opened and closed.

Skate-Trolley has a handle (15) attached to the external frame (18) (for example by means of bolts or rivets) so that it can be carried in a standard suitcase like manner. The handle can be placed in various positions, and more than one handle can be applied.

The two following points, together, make the invention unique and particularly effective in the field of the application.

First, the Skate-trolley provides for a special turning effect.

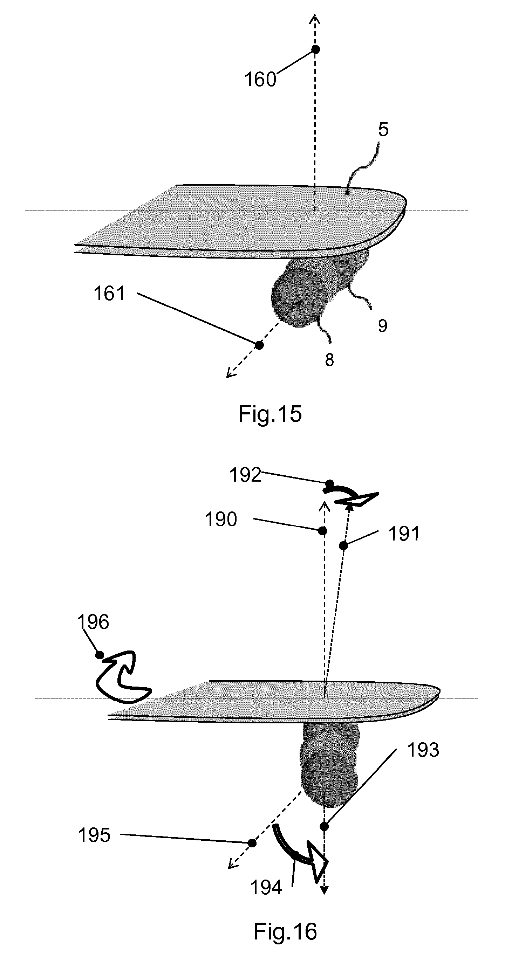

To help the user move efficiently in limited spaces, the Skate Trolley takes advantage of the combined effect of scooter and skateboard steering mechanisms. In other words, the driving stick (4) directly steers the front wheel (1) and enables the driver to steer while standing on the platform in a scooter manner. The rear wheels (8,9) behave in a skateboard like manner; the rear wheels axle (14) can gain an angle with respect to the platform letting the baggage tilt in respect of the ground; this consecutively will also make the rear wheels steer in the direction of the tilt and help the driver in turns. (This effects will become more apparent with reference to Fig.15).

Secondly, the Skate trolley has no extra scooter frame.

The Skate trolley is designed in such a way that there is no internal frame connecting the wheels, the driving stick and the standing platform. In other words, the external luggage shell structure (18) itself represent the infrastructure of Skate-trolley, so that there is no need for a separate and heavy structure such as a scooter frame.

This design solution is key for the invention; it allows the Skate-Trolley to be very light and at the same time maximizes the space for the luggage inside the baggage.

Figure 2 schematically represent a 2D view of Skate-Trolley seen from the top - with the standing platform (5) in the operational position.

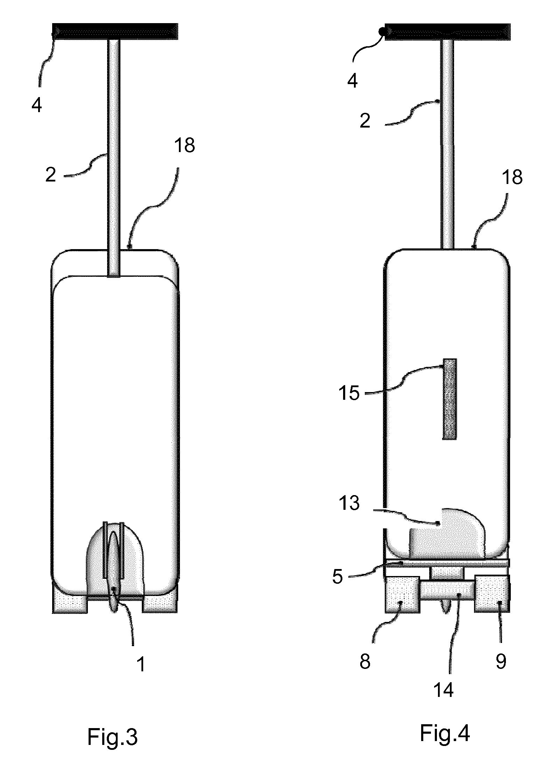

Figure 3 schematically represents a 2D view of Skate-Trolley seen from the front - the driving stick (2, 4) is in the operational position, while it can also assume a closed position.

The front wheel is (1) connected to the driving stick (2,4).

Figure 4 schematically represents a 2D view of Skate-Trolley seen from the back - the driving stick (2, 4) is in the operational position and the cavity area (13) where the front part of the foot of a user can be preferably placed while riding is visible. The rear wheels can be seen (8,9) connected to the pivoting axle (14).

References: (13) Cavity area, (14) Rear wheels pivoting axle, (15) Carrying handle.

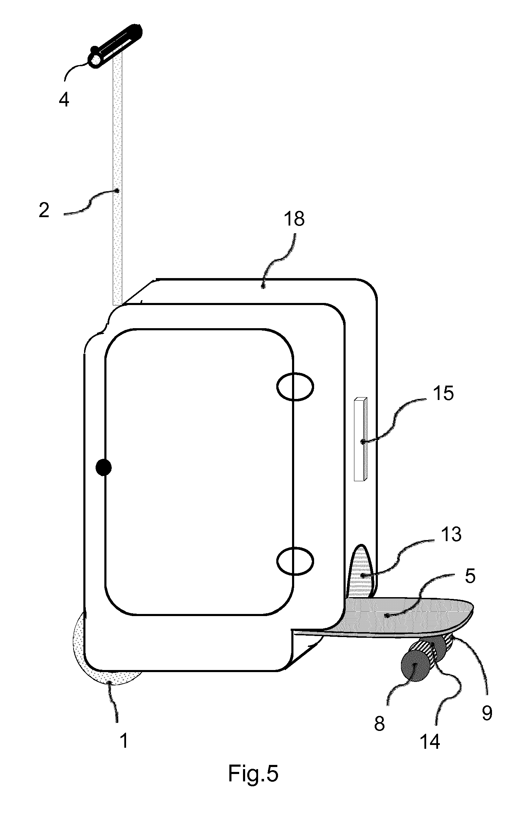

Figure 5 schematically represents a 3D VIEW of Skate-Trolley seen in a 3D perspective - with the driving stick (4) and the standing platform (5) in the operational position.

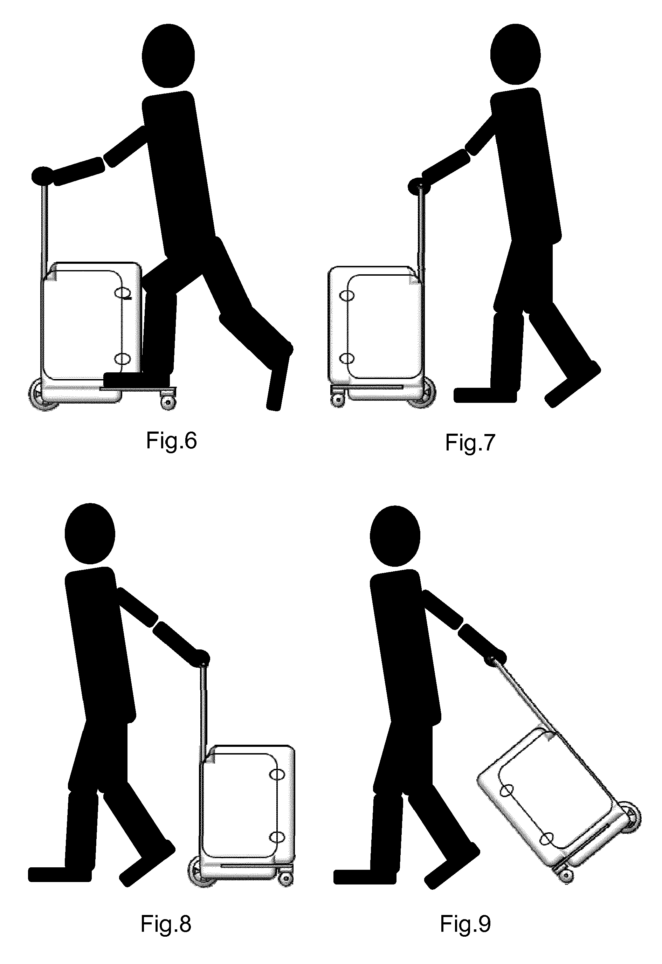

Figure 6 schematically exemplifies the usage of the Skate-Trolley: while riding - with the driving stick (2, 4) and standing platform (5) in the operational position, and the Skate-Trolley ridden by user.

Figure 7 schematically exemplifies the usage of the Skate-Trolley: while pushing - with the driving stick (2, 4) in the operational position and the standing platform (5) in the closed position, being pushed by the user with the Skate-Trolley standing on all three wheels.

Figure 8 schematically exemplifies the usage of the Skate-Trolley: while pulling - with the driving stick (2, 4) in the operational position and the standing platform (5) in the closed position, being pulled by the user with the Skate-Trolley standing on all three wheels.

Figure 9 schematically exemplifies the usage of the Skate-Trolley: Trolley pulling - with the driving stick (2, 4) in the operational position and the standing platform (5) in the closed position, being pulled by the user in a trolley manner with the Skate-Trolley standing on just the rear wheels (8, 9).

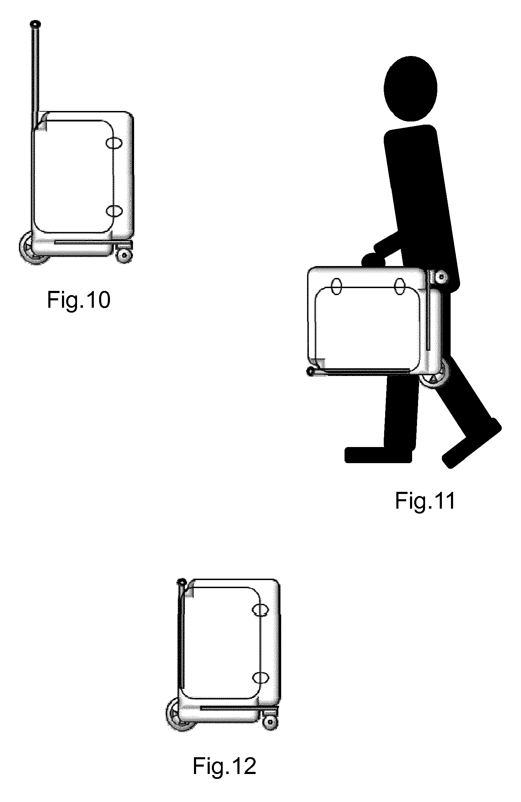

Figure 10 schematically exemplifies the usage of the Skate-Trolley: while standing - with the driving stick (2, 4) in the operational position and the standing platform (5) in the closed position, with the Skate-Trolley standing by itself on all three wheels.

Figure 11 schematically exemplifies the usage of the Skate-Trolley: while carrying - with both the driving stick (2, 4) and the standing platform (5) in the closed position, being carried by the user from the handle (15).

Figure 12 schematically exemplifies the usage of the Skate-Trolley: while stowing - with both the driving stick (2, 4) and the standing platform (5) in the closed position, ready to be stowed.

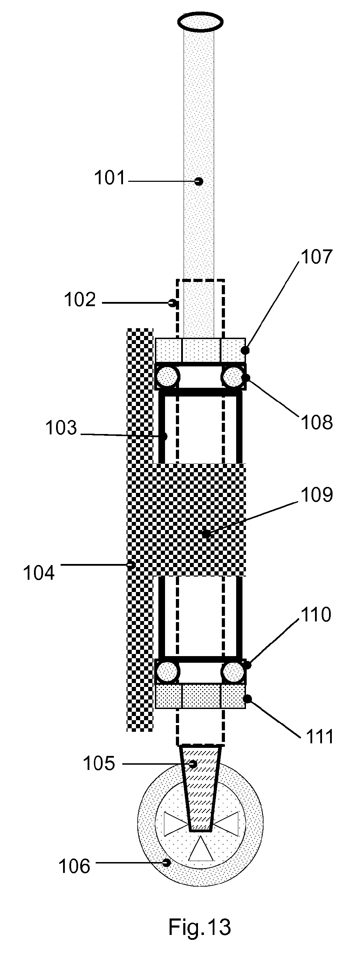

Figure 13 schematically represents the front driving mechanism of Skate-Trolley.

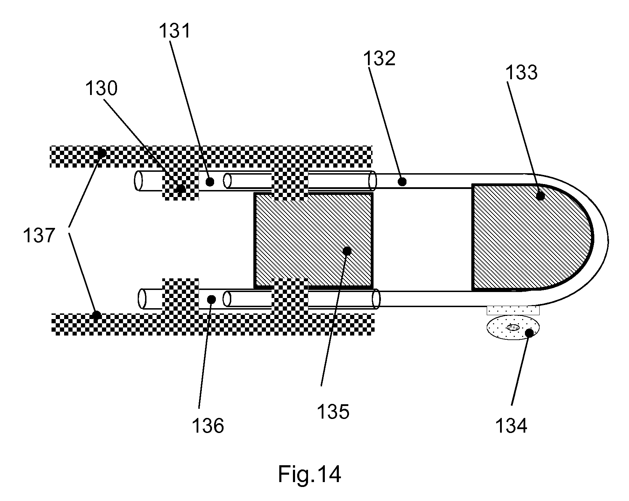

As already mentioned before, the Skate trolley is designed in such a way that there is no internal frame connecting the wheels, the driving stick and the standing platform. In other words, the external luggage shell structure (18) itself represent the infrastructure of Skate-trolley, so that there is no need for a separate and heavy structure such as a scooter frame. This is achieved by building an external structure (shown in Fig.13 and Fig.14) that has a tube shaped hollow area where the Tube1 (103), Tube4 (131) and Tube5 (136) perfectly fit and are glued and blocked. The driving stick and the platform are connected to these tubes by means of telescopic solutions.

References: (101) TUBE3 - Pull Out Driving Stick, (102) TUBE2 - Rotating Tube, (103) TUBE1 - Blocked Tube, (104) External Structure, (105) Fork, (106) Front Wheel, (107) Top Bolt, (108) Top Roller, (109) Hollow Area where TUBE1 is placed, (110) Bottom Roller, (111) Bottom Bolt.

The Driving Stick is described more in detail with reference to Fig.13.

A tube (103, Tube1) made of light but resistant material (aluminum, carbon-fiber, plastic etc.) is attached to the front part of the external frame (18). A second tube (102, Tube2) preferably of the same material, slightly longer in size and of smaller diameter, is fitted inside this tube telescopically. At both ends there are circular rollers (108,110) so that Tube2 can easily turn on its axis inside Tube1. At the bottom, underneath the roller, a fork (105) connects it to the front wheel (1,106). By steering this tube, the front wheel will steer. Both rollers are blocked in place by a bolt (107,111) screwed on Tube2.

The driving stick (101, Tube3) shaped as a T, has a diameter slightly smaller of Tube2 (102), in such a way that it can be pulled telescopically in and out from it. A pin connected to a spring fitted inside the driving stick will lock it in the operational or closed position. The user will switch from one position to the other by pressing on the pin and unlocking it (not shown in the drawings).

Figure 14 schematically represents the standing platform mechanism of Skate-Trolley.

References: (130) Hollow Area where TUBE4 and TUBE6 are placed, (131) TUBE4 Blocked right side tube, (132) TUBE6 U shaped Tube, (133) Heel Platform, (134) Rear Wheels system, (135) Front Foot Platform, (136) TUBE6 - Blocked left side Tube The Standing Platform (Fig. 14) comprises two tubes: (131) Tube4 and (136) Tube5, made of light but resistant material (aluminum, carbon-fiber, plastic etc.) that are attached to the external frame of Skate-Trolley.

The standing platform (133) is connected to a U shaped lightweight tube (132) Tube6. This U shaped tube is of smaller diameter with respect of the Tube4 and Tube5 and it will telescopically shift in and out of them. The standing platform has a skateboard like wheel system (134) attached to it.

This wheel system (134) has as pivoting axle (seen also in Fig.2, reference 14), connected to the two wheels (8, 9), that can tilt in respect to the standing platform. While tilting, the axle will also steer the wheels (8, 9) in the direction of the tilt in a skateboard manner (see also Fig.15). Inside Tube6 there is a pin connected to a spring that will lock the standing platform in operational position (not shown in the drawings). The user will switch from one position to the other by pressing on the pin and unlocking it.

Figure 15 schematically represents the mechanisms of the Skate-Trolley: The steering effect of the rear wheels is shown, while the Platform is horizontal at rest.

References: (160) Platform orthogonal axis when platform at rest position, (161) Read axle axis orthogonal to the frame and to the moving direction.

Figure 16 schematically represents the mechanisms of the Skate-Trolley: The Rear Wheels steering effect is shown, while the platform is tilted to the right.

References: (190) Vertical axis in respect to the ground, (191) Platform orthogonal axis (192) Tilting angle of the platform to the right, (193) Rear Wheels axle new axis while platform tilting, (194) Axle steering angle, (195) Rear Wheel axle axis when platform at rest, (196) Steering effect to the right in the direction of the tilt.

From the detailed description provided, it is clear that the referenced similar projects all have differences from this invention.

Such differences with respect of Skate-Trolley are summarized in the following: USD268938 May 10 1983
Has only one back wheel.
Does not uses the skate-board type steering effect
Platform and wheels are not pulled out telescopically from baggage shape
Does not have a T shape driving stick
There is no steering mechanism

US2009/0315301 Dec 24 2009
Has only one back wheel.
Does not uses the skate-board type steering effect
Platform and wheels are not pulled out telescopically from baggage shape
There is no steering mechanism

WO2004/012984 Feb 12 2004
Has only one back wheel.
Does not uses the skate-board type steering effect
Platform and wheels are not pulled out telescopically from baggage shape
Baggage is made of soft material
Baggage is build around a scooter frame

US2004/0094919 May 20 2004
Has only one back wheel.
Does not uses the skate-board type steering effect
Platform and wheels are not pulled out telescopically from baggage shape
Baggage does not stand up by itself (version with 2 wheels)
Baggage is ridden sideways (version with 3 wheels)

WO2004/093595 Nov 4 2004
Has only one back wheel.
Does not uses the skate-board type steering effect
Platform and wheels are not pulled out telescopically from baggage shape
Baggage does not stand up by itself
Baggage is build around a scooter frame

US4145065 Mar 20 1979
Does not uses the skate-board type steering effect
Platform and wheels are not pulled out telescopically from baggage shape
Does not have a T shape driving stick
Steering is achieved through a pivot point
Not box shaped.

US3314494 Apr 18 1967
Does not uses the skate-board type steering effect
Platform and wheels are not pulled out telescopically from baggage shape
Does not have a T shape driving stick
There is no steering mechanism
Baggage is ridden sideways

US3413011 Nov 26 1968
Does not uses the skate-board type steering effect
Platform and wheels are not pulled out telescopically from baggage shape
Does not have a T shape driving stick
There is no steering mechanism
Baggage is ridden sideways

US2004/0056442 Mar 25 2004
Does not uses the skate-board type steering effect
Platform and wheels are not pulled out telescopically from baggage shape
Standing platform is build of a complex structure that reduces the volume for luggage.

US7731204 Jun 8 2010
Has only one back wheel.
Does not uses the skate-board type steering effect
Platform and wheels are not pulled out telescopically from baggage shape
Baggage is made of soft material
Baggage is build around a scooter frame
Baggage does not stand up by itself

EP1138590 Apr 10 2001
Has only one back wheel.
Does not uses the skate-board type steering effect
Baggage does not stand up by itself
Standing platform is made out of three telescopic segments, which makes system unstable under a person weight.

WO03/045185 of Jun 5 2003
Has only one back wheel.
Does not uses the skate-board type steering effect
Platform and wheels are not pulled out telescopically from baggage shape
Baggage is build around a scooter frame
Baggage is ridden sideways
Turning is achieved through a pivot point and not by the T bar turning the wheels.

US7431311 of Oct 7 2008
Has only one back wheel.
Does not uses the skate-board type steering effect
Wheels are not pulled out telescopically from baggage shape
Baggage is build around a scooter frame
Baggage is ridden sideways
Baggage is made of soft material

US2010/0213680 of Aug 26 2008
Has only one back wheel.
Does not uses the skate-board type steering effect
Platform and wheels are not pulled out telescopically from baggage shape
Baggage is build around a scooter frame
Baggage is ridden sideways

WO03/093093 of Nov 13 2003
Has only one back wheel.
Does not uses the skate-board type steering effect
Platform and wheels are not pulled out telescopically from baggage shape
Baggage is build around a scooter frame
It can only be used as a baggage if not ridden.

WO2010/094824 of Aug 26 2010
Does not uses the skate-board type steering effect
Front wheel is pulled out telescopically from baggage shape rather than the rear wheel
Baggage is build around a scooter frame
Bag is placed behind rider foot instead of in front

WO03/045185 of Jun 5 2003
Has only one back wheel.
Does not uses the skate-board type steering effect
Platform and wheels are not pulled out telescopically from baggage shape
Baggage is build around a scooter frame
Baggage is ridden sideways

PCT FR01/02556 of Sept 17 2001
Has only one back wheel.
Does not uses the skate-board type steering effect
Platform and wheels are not pulled out telescopically from baggage shape
Baggage is build around a scooter frame
Baggage is made of soft material

Skate trolley is designed in such a way that, in a preferred embodiment:
it is a device for storing luggage that can be converted and be ridden as skateboard and driven like a scooter;
it has a total of at least three rollers that maintain the baggage up straight in a standing position (Fig.10);
it has at least one of said rollers (1, front) that can be rotated on his vertical axis by means of the driving stick (2);
it has two other of said rollers (8,9) connected to the standing platform (5) that steer as the platform tilts in the typical skateboarding turning effect (Fig. 15);
it has pins that can lock into operational position the standing platform (5) and the driving stick (2);
it has a door (12) so the inside of the baggage can be accessed;
it has a cavity area (13) to allow the user to place the front part of the foot in this zone while the heel can be placed over the standing platform (5) in the operational position;
it has a handle so it can be carried as a standard luggage (Fig. 11);
both the driving stick (2,4) and the standing platform (5) can be moved in a closed position in order to be included in a box like shaped formed by the baggage (Fig. 12);
the user can stand on the platform (Fig.8) with one foot, steering through the driving stick while pushing with the other foot to gain speed;
the device can be pushed (Fig.7) and pulled (Fig.8) from the driving stick (2) to be moved around while standing up on the three wheels;
the device can also be used in a trolley like manner (Fig.9) by rolling and carrying the luggage from the driving stick (4) in such a way that only the rear wheels (8,9) touch the ground;
there is no internal frame connecting the driving stick to the standing platform, the external luggage shell structure itself acts as the infrastructure of Skate-trolley;
it uses the combined steering effect of a Scooter through the driving stick and of a Skateboard through its pivoting rear axle under the platform to ease turns (Fig. 15);
it can be built in different sizes, one of which is designed to fit the carry-on regulations of air travel;
the front and driving wheel (1) can be substituted by two parallel wheels steering together as an option to increase stability.

An embodiment of the Skate-Trolley comprises: an external frame for containing horizontal and vertical components comprising a container for storing luggage, the container includes a door with hinges and a closing mechanism; a driving stick that can be telescopically pulled in a vertical manner from the external frame, this driving stick is connected to a front wheel through a fork; an horizontal standing platform shaped as a skateboard platform that can be telescopically pulled in a horizontal manner from the external frame; a skateboard axle mechanism that is attached to the standing platform and connected to the rear wheels , the axle mechanism has tilting capabilities that in turn will steer the wheels axle in the direction of the tilt; a handle mechanism attached to the external frame; preferably a cavity area to be found in the external frame above the standing platform; preferably a locking mechanism for locking the driving stick in position; preferably a second locking mechanism for locking the standing platform in operational position.

Moreover, preferably the wheels maintain the device in a standing position and with the driving stick in the operational position the device can be pushed and pulled while standing. Skate-Trolley can be used by the user according to the following method, wherein the user will:
pull the driving stick vertically into operational position; pull the standing platform horizontally into operational position; place one foot over the standing platform and inside the cavity area;
instigate movement of the device by pushing away with the alternative foot in a skateboard moving manner; alternate direction using the driving stick, or by tilting the device, or by the combined effect of the two actions to achieve maximum result.

The device according to the invention, as merely exemplified in the present description with the implementing details herein given, is susceptible to a number of changes and variants apparent to the skilled in the art, that do not depart from the scope of the present invention as defined by the appended claims.

For example, the Skate-trolley might comprise a number of wheels greater than three, if so desired. For example, the front wheel attached to the driving stick can be substituted by two parallel wheels for increased stability. Carrying Handles can be more than one and placed in various positions.

## Claims

1. A luggage scooter device comprising:
a shell structure (18) comprising a container for storing luggage, said container including a door (12) with hinges (17) and a closing mechanism (16);
at least one front wheel (1) rotatably connected to said shell structure (18);
a driving stick (2, 4) that can be telescopically pulled out in a vertical manner from said shell structure (18), said driving stick (2, 4) being connected to said at least one front wheel (1) through a fork so that said at least one front wheel (1) can be steered;
a horizontal standing platform (5) shaped as a skateboard platform that can be telescopically pulled out in a horizontal manner from said shell structure (18);
said luggage scooter device being **characterized in that** it further comprises:
a skateboard axle mechanism (14) that is attached to said standing platform (5) and is rotatably connected to a pair of rear wheels (8, 9), the skateboard axle mechanism (14) comprising tilting elements adapted to steer said pair of rear wheels (8, 9) in the direction of the tilt.

2. A luggage scooter device according to Claim 1, further comprising a cavity area (13) located in said shell structure (18) above said standing platform (5).

3. A luggage scooter device according to Claim 2, wherein said cavity area (13) is so shaped as to allow a user to place the front part of his/her foot in said cavity area (13), while said user's heel is placed over said standing platform (5) in said pulled out position.

4. A luggage scooter device according to any one of Claims 1 to 3, wherein said shell structure (18) is a hollow box-shaped body.

5. A luggage scooter device according to any one of Claims 1 to 4, comprising a locking mechanism adapted to lock said driving stick (2, 4) in operational position; and further comprising a second locking mechanism for locking said standing platform (5) in operational position.

6. A luggage scooter device according to any one of Claims 1 to 5, comprising at least one handle mechanism (15) attached to said shell structure (18).

7. A luggage scooter device according to any one of Claims 1 to 6, wherein said at least one front wheel (1) and said pair of rear wheels (8, 9) are adapted to maintain said luggage scooter device in a straight up standing position.

8. A luggage scooter device according to Claim 7, wherein said luggage scooter device is adapted to be pushed and pulled while standing with said driving stick (2, 4) in the operational pulled out position.

9. A luggage scooter device according to any one of Claims 1 to 8, wherein said driving stick (2, 4) and said horizontal standing platform (5) are adapted to be closed into a position such that they are included in a box-like shape formed by said luggage scooter.

10. A luggage scooter device according to any one of Claims 1 to 10, comprising two parallel wheels (1) attached to said driving stick (2, 4) for increased stability.

11. A method of using a luggage scooter device as claimed in any one of claims 1 to 11, comprising:
pulling out the driving stick (2, 4) vertically into operational position;
pulling out the standing platform (5) horizontally into operational position;
placing one foot over the standing platform (5);
instigating movement of the luggage scooter device by pushing away with the alternative foot in a skateboard moving manner;
alternating direction using the driving stick (2, 4), or by tilting the luggage scooter device around said skateboard axle mechanism (14), or by the combined effect of the two actions to achieve maximum results.

## Patentansprüche

1. Gepäckrollervorrichtung, umfassend:
eine Schalenstruktur (18), die einen Behälter zum Aufbewahren von Gepäck umfasst, wobei der Behälter eine Tür (12) mit Scharnieren (17) und einem Schließmechanismus (16) umfasst;
mindestens ein Vorderrad (1), das drehbar mit der Schalenstruktur (18) verbunden ist;
einen Lenkstab (2, 4), der teleskopartig in einer vertikalen Weise aus der Schalenstruktur (18) herausgezogen werden kann, wobei der Lenkstab (2, 4) mit dem mindestens einen Vorderrad (1) durch eine Gabel derartig verbunden ist, dass das mindestens eine Vorderrad (1) gesteuert werden kann;
eine horizontale Standplattform (5), die als Skateboardplattform geformt ist und teleskopisch aus der Schalenstruktur (18) in horizontaler Weise herausgezogen werden kann;
die Gepäckrollervorrichtung **dadurch gekennzeichnet ist, dass** sie ferner umfasst:
einen Skateboardachsenmechanismus (14), der an der Standplattform (5) befestigt und drehbar mit einem Paar von Hinterrädern (8, 9) verbunden ist, wobei der Skateboardachsenmechanismus (14) Kippelemente, die geeignet sind, das Paar von Hinterrädern (8, 9) in Neigungsrichtung zu steuern, umfasst.

2. Gepäckrollervorrichtung nach Anspruch 1, ferner umfassend einen Hohlraumbereich (13), der in der Schalenstruktur (18) über der Standplattform (5) angeordnet ist.

3. Gepäckrollervorrichtung nach Anspruch 2, wobei der Hohlraumbereich (13) derart geformt ist, um es einem Benutzer zu ermöglichen, den vorderen Teil seines Fußes in den Hohlraumbereich (13) zu platzieren, während die Ferse des Benutzers auf der Standplattform (5) in der herausgezogenen Position angeordnet ist.

4. Gepäckrollervorrichtung nach einem der Ansprüche 1 bis 3, wobei die Schalenstruktur (18) ein hohler kastenförmiger Körper ist.

5. Gepäckrollervorrichtung nach einem der Ansprüche 1 bis 4, umfassend einen Verriegelungsmechanismus, der eingerichtet ist, den Lenkstab (2, 4) in Betriebsposition zu verriegeln; und ferner umfassend einen zweiten Verriegelungsmechanismus zum Verriegeln der Standplattform (5) in Betriebsposition.

6. Gepäckrollervorrichtung nach einem der Ansprüche 1 bis 5, umfassend mindestens einen Griffmechanismus (15), der an der Schalenstruktur (18) angebracht ist.

7. Gepäckrollervorrichtung nach einem der Ansprüche 1 bis 6, wobei das mindestens eine Vorderrad (1) und das Paar von Hinterrädern (8, 9) angepasst sind, um die Gepäckrollervorrichtung in einer aufrechtstehenden Position zu halten.

8. Gepäckrollervorrichtung nach Anspruch 7, wobei die Gepäckrollervorrichtung angepasst ist, um mit dem Lenkstab (2, 4) in der herausgezogenen Betriebsposition während des Stehens geschoben und gezogen zu werden ist.

9. Gepäckrollervorrichtung nach einem der Ansprüche 1 bis 8, wobei der Lenkstab (2, 4) und die horizontale Standplattform (5) eingerichtet sind, in eine Position eingefahren zu werden, sodass diese innerhalb der kastenartigen Form, die durch den Gepäckroller geformt wird, enthalten sind.

10. Gepäckrollervorrichtung nach einem der Ansprüche 1 bis 9, umfassend zwei parallele Räder (1), die mit dem Lenkstab (2, 4) zur Erhöhung der Stabilität verbunden sind.

11. Verfahren zum Verwenden einer Gepäckrollervorrichtung nach einem der Ansprüche 1 bis 10, umfassend:
Herausziehen des Lenkstabs (2, 4) vertikal in eine Betriebsposition;
Herausziehen der Standplattform (5) horizontal in eine Operationsposition;
Platzieren eines Fußes über der Standplattform (5);
Veranlassen der Bewegung der Gepäckrollervorrichtung durch Abdrücken mit dem anderen Fuß gemäß einer Skateboardbewegungsart;
Verändern der Richtung unter Verwendung des Lenkstabs (2, 4) oder durch Kippen der Gepäckrollervorrichtung um den Skateboardachsenmechanismus (14) oder durch eine kombinierte Wirkung der beiden Aktionen, um maximale Resultate zu erzielen.

## Revendications

1. Dispositif de trottinette à bagages comprenant :
une structure de coque (18) comprenant un contenant permettant de loger des bagages, ledit contenant incluant une porte (12) avec des charnières (17) et un mécanisme de fermeture (16) ;
au moins une roue avant (1) raccordée en rotation à ladite structure de coque (18) ;
un manche de conduite (2, 4) qui peut être télescopiquement retiré de manière verticale de ladite structure de coque (18), ledit manche de conduite (2, 4) étant raccordé à au moins une roue avant (1) par l'intermédiaire d'une fourche de sorte que ladite au moins une roue avant (1) puisse être dirigée ;
une plateforme sur pied horizontale (5) formée comme une plateforme de planche à roulettes qui peut être téléscopiquement retirée de manière horizontale de ladite structure de coque (18) ;
ledit dispositif de trottinette à bagages étant **caractérisé en ce qu'**il comprend en outre :
un mécanisme d'essieu de planche à roulettes (14) qui est fixé à ladite plateforme sur pied (5) et est raccordé en rotation à une paire de roues arrières (8, 9), le mécanisme d'essieu de planche à roulettes (14) comprenant des éléments d'inclinaison adaptés pour diriger ladite paire de roues arrières (8, 9) dans la direction de l'inclinaison.

2. Dispositif de trottinette à bagages selon la revendication 1, comprenant en outre une zone de cavité (13) située dans ladite structure de coque (18) au-dessus de ladite plateforme sur pied (5).

3. Dispositif de trottinette à bagages selon la revendication 2, dans lequel ladite zone de cavité (13) est conformée de manière à permettre à un utilisateur de placer la partie avant de son pied dans ladite zone de cavité (13), alors que ledit talon de l'utilisateur est placé au-dessus de ladite plateforme sur pied (5) dans ladite position retirée.

4. Dispositif de trottinette à bagages selon l'une quelconque des revendications 1 à 3, dans lequel ladite structure de coque (18) est un corps en forme de boîte creuse.

5. Dispositif de trottinette à bagages selon l'une quelconque des revendications 1 à 4, comprenant un mécanisme de blocage adapté pour bloquer ledit manche de conduite (2, 4) en position opérationnelle ; et comprenant en outre un second mécanisme de blocage permettant de bloquer ladite plateforme sur pied (5) en position opérationnelle.

6. Dispositif de trottinette à bagages selon l'une quelconque des revendications 1 à 5, comprenant au moins un mécanisme de poignée (15) fixé à ladite structure de coque (18).

7. Dispositif de trottinette à bagages selon l'une quelconque des revendications 1 à 6, dans lequel ladite au moins une roue avant (1) et ladite paire de roues arrières (8, 9) sont adaptées pour maintenir ledit dispositif de trottinette à bagages dans une position sur pied droite.

8. Dispositif de trottinette à bagages selon la revendication 7, dans lequel ledit dispositif de trottinette à bagages est adapté pour être poussé et tiré tout en se tenant sur pied avec ledit manche de conduite (2, 4) dans la position retirée opérationnelle.

9. Dispositif de trottinette à bagages selon l'une quelconque des revendications 1 à 8, dans lequel ledit manche de conduite (2, 4) et ladite plateforme sur pied horizontale (5) sont adaptés pour être fermés dans une position telle qu'ils sont inclus dans une forme de type boîte formée par ladite trottinette à bagages.

10. Dispositif de trottinette à bagages selon l'une quelconque des revendications 1 à 9, comprenant deux roues parallèles (1) fixées audit manche de conduite (2, 4) pour une stabilité accrue.

11. Procédé d'utilisation d'un dispositif de trottinette à bagages selon l'une quelconque des revendications 1 à10, comprenant :
le retrait du manche de conduite (2, 4) verticalement en position opérationnelle ;
le retrait de la plateforme sur pied (5) horizontalement en position opérationnelle ;
le placement d'un pied sur la plateforme sur pied (5) ;
l'initiation d'un mouvement du dispositif de trottinette à bagages par éloignement par poussée avec l'autre pied par un mouvement à la manière d'une planche à roulettes ;
l'alternance de la direction en utilisant le manche de conduite (2, 4), ou par inclinaison du dispositif de trottinette à bagages autour dudit mécanisme d'essieu de planche à roulettes (14), ou par l'effet combiné des deux actions pour atteindre des résultats maximaux.
